Europäisches Patentamt

(19) European Patent Office

Office européen des brevets

(11) Publication number: **0 120 004**
**B1**

(12) # EUROPEAN PATENT SPECIFICATION

(45) Date of publication of patent specification: **06.05.87**

(51) Int. Cl.⁴: **C 04 B 35/58**

(21) Application number: **82903511.2**

(22) Date of filing: **30.09.82**

(86) International application number:
**PCT/US82/01373**

(87) International publication number:
**WO 84/01372 12.04.84 Gazette 84/10**

(54) **METHOD OF PREPARING POWDER INGREDIENTS FOR SUBSEQUENT CONSOLIDATION.**

(43) Date of publication of application:
**03.10.84 Bulletin 84/40**

(45) Publication of the grant of the patent:
**06.05.87 Bulletin 87/19**

(84) Designated Contracting States:
**DE GB**

(56) References cited:
**DE-A-1 949 587**
**GB-A- 987 841**
**GB-A-1 246 689**
**US-A-4 071 594**
**US-A-4 221 596**
**US-A-4 243 621**
**US-A-4 280 973**
**US-A-4 360 506**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(72) Inventor: **BECKWITH, Elaine, C.**
**13716 Hamilton**
**Riverview, MI 48192 (US)**
Inventor: **EZIS, Andre**
**23235 West River Road**
**Grosse Ile, MI 48138 (US)**

(74) Representative: **Messulam, Alec Moses et al**
**A. Messulam & Co. 24 Broadway**
**Leigh on Sea Essex SS9 1BN (GB)**

## Description

In the maufacture of ceramic parts, powder ingredients are first admixed and dry milled to uniformly mix the ingredients and to create the proper proportions if attrition or wear from the milling media is desired as part of the ingredients. The milled powder mixture can then be subjected to cold compaction, gas chemical treatment, and hot pressing to produce the desired product. If the milling is not complete, that is, the powder ingredients are not reduced to a desired average or mean particle size and desired homogeneity, then incomplete or unreacted ingredients may result from subsequent gas chemical treatment, resulting in a hot pressed product with internal flaws. In the case of the manufacture of a silicon nitride cutting tool material, these flaws may originate by the oxidation of free silicon and impurities, such as iron oxide, or unreacted additives to form silicide particles, such as iron silicide. The silicide forms a solute which dissolves silicon nitride during hot pressing and, when cooled recrystallization results in large beta $Si_3N_4$ particles adjacent the silicide along with porosity. These are soft spots in the ceramic which pull out or degrade during use of the ceramic, particularly as a cutting tool.

What is needed is a method of milling the starting powder ingredients to ensure that the particles of the milled mixture are not above a critical average or mean particle size, such as 35 microns ($\mu$m), thus preventing packing of the mixture along the sides of the milling chamber and thus ensuring a constant milling action. Such method should not incorporate materials to achieve such object that will provide for undesirable side reactions, should optimally reduce the milling time, should improve the green strength of the milled mixture when compacted, and should minimize, if not totally eliminate, contamination that results in flaws in the final ceramic product. Heretofore, prior art methods have incorporated milling aids in a high amount of about 5% by weight, such as stearic acid, Zn stearate, oleic acid and carbowax, each of which have a high carbon content which can cause contamination. U.K. Patent 987841 discloses a method of producing ceramic materials in which a high amount 6% by weight of a milling lubricant is used as a milling aid.

According to the present invention there is provided a method of making a compacted body useful in the fabrication of an improved, fully densified, silicon nitride ceramic body, comprising mixing a supply of silicon powder and a supply of oxygen carrying agents with a dry milling lubricant, milling said mixture and forming a compact of said milled mixture characterised in that said dry milling lubricant has a low surface energy value less than $1.5\times10^{-4}$ N/cm (15 dyne/cm) and a glass transition temperature of $-54°C$ to $-82°C$ and said dry milling lubricant is added in small amounts effective to avoid packing of said powder mixture along the sides of a milling chamber during the milling operation and thereby permittiong said milling to reduce all particles to a size no greater than 40 microns ($\mu$m) and providing the compact having a green strength of at least 42% of full theoretical.

It is preferable that the dry lubricant be selected from the group consisting of polybutylacrylate, poly 2—ethylhexylacrylate and polyisobutylacrylate. The dry lubricant may be further characterised by its ability to render lubrication even though added in an extremely small amount, thus avoiding carbon contamination. The lubricant is effective to avoid packing of the powder mixture along the sides of the milling chamber during the milling operation, thereby permitting said milling to reduce the particles to the desired mean size of no greater than 35 microns ($\mu$m) within a milling period equal to or less than 48 hours. It is advantageous to add the dry lubricant in an amount of 0.001—0.006% by weight of the mixture or about 0.001 grams per 100 grams of mixture.

It is preferable if the starting materials have defined purities. For example, silicon powder may have a purity of 97% or greater, and the oxygen carrying powder agents may have a purity such as 99.99% for $Y_2O_3$ and 99.5% for $Al_2O_3$. All of the starting powder materials can have an average particle size greater than 270 mesh (53 micrometers), and operably the starting average particle size can be as high as 10—60 micrometers.

Optimally, the starting powder ingredients may comprise silicon powder, $Y_2O_3$, and $Al_2O_3$, the powder ingredients containing trace contaminants of up to 1.0% Fe, 0.3% Al, 1.0% Mn, and 0.1% Ca, and an $O_2$ content of no greater than 0.5%.

Detailed description

A preferred method for making a compacted body useful in the fabrication of an improved, fully densified, silicon nitride ceramic product according to this invention is as follows.

1. Mixing

An admixture of powder ingredients comprising silicon powder, reactive oxygen carrying powder agents, and a dry milling lubricant is prepared. The reactive oxygen carrying powder agents is defined herein to mean powder ingredients that are effective to form second phase crystallites, particularly oxynitrides, when reacted with the silicon powder under a heated nitrogen atmosphere. The oxygen carrying agents can be advantageously selected from the group consisting of $SiO_2$, $Y_2O_3$, $CeO_2$, $ZrO_2$, $HfO_2$, and other rare earths. Use of these agents will improve physical characteristics and formation of a second phase crystallite which will be uniformly disbursed and which substantially displaces a detrimental glassy silicate phase normally formed except for a controlled and limited amount of the oxygen carrying agent.

For purposes of the preferred method, a uniform powder mixture is typically prepared with 2000 grams of silicon (86.6 weight percent of mixture), 278 grams of $Y_2O_3$ (12 weight percent of mixture and 13.9% of silicon), and 32 grams $Al_2O_3$ (1.4 weight percent of mixture and 1.6% of silicon). The usable range for the oxygen carrying agent is 0.4—2.3 molar percent of the mixture and 0.4—2.4 molar percent of silicon. $Y_2O_3$ is normally used in the range of 3—19% by weight of the silicon and 3—16% by weight of the mixture. A glass forming oxide, such as $Al_2O_3$, is used in the range of 0.4—5% by weight of the silicon, 0.4—4% by weight of the mixture. $SiO_2$ is present usually as an oxide on the silicon powder and increased to 1—3% by weight of the silicon by milling. The oxide that is added to be reactive with $SiO_2$ and $Y_2O_3$, such as $Al_2O_3$, can be selected from the group consisting of MgO, $CeO_2$, $B_2O_3$, $Al_2O_3$, $Fe_2O_3$, CaO, $Cr_2O_3$, $ZrO_2$, BeO, and rare earth oxides.

Silicon is preferably selected to have 98% or greater purity and a starting average particle size of about 10—20 microns ($\mu$m) with random particles in the 100—540 micron range. The major trace metal contaminants experienced with such purity include: iron up to 1.0%, aluminum up to 0.5% and manganese up to 0.9%. Nonmetallic contaminants include: carbon up to 0.05%, and oxygen less than 0.5%. The average powder size of the $Y_2O_3$ powder is about 0.438 microns (438Å) with random particles as large as 40 microns. The average particle size of the $Al_2O_3$ powder is 0.3—.5 microns with random particles as large as 50 microns.

To the above ingredients is added a dry milling lubricant which has a low surface energy value less than $1.5 \times 10^{-4}$ N/cm (15 dyne/cm) and preferably a molecular weight of 5000. The dry milling lubricant is preferably selected from the group consisting of polybutylacrylate, poly 2—ethylhexylacrylate, and polyisobutylacrylate. The dry milling lubricant is added in an effective small amount to ensure that the powder mass will not collect and pack along the sides of the milling chamber during the milling operation, thereby permitting the milling to reduce all particles to the desired size of no greater than 40 microns ($\mu$m) within a milling period equal to or less than 48 hours. An effective small amount is in the range of 0.001—0.006% by weight of the mixture; this amount is insufficient to cause a problem by carbon contamination.

### 2. Milling

The mixture is then comminuted and blended by being charged into an inert milling jar along with grinding media in the form of Burundum® cylinders (85% $Al_2O_3$ and 15% $SiO_2$, which adds $Al_2O_3$ to the mixture by attrition), and is milled for 48 hours at 64 rpm. Therafter the mixture is separated from the media by use of a 10 mesh (2.0mm) screen. The resulting milled mixture must have no particle of a size greater than 35 microns ($\mu$m). If any of the particles in the milled mixture are greater than 35 microns, the deleterious effects indicated earlier would ensue. Such effects include (a) insufficient nitriding of all particles leaving free silicon which leads to flaws in the final product and thus decreases strength, (b) local concentrations of $Y_2O_3$, $Al_2O_3$, or silicon may appear causing strength variations in the final product.

The oxygen level after milling in air will be increased to about 1.6 weight percent of the silicon, and be present as an oxide coating on the silicon in an amount of about 3 weight percent. The oxide coating should never be stripped off for milling purposes. The ratio of $Y_2O_3/SiO_2$ is controlled to be in the range of 1.1—6.4 and preferably about 4.

### 3. Cold compaction

A measured quantity of the milled mixture is then loaded into a cold pressed die arrangement and pressed at ambient conditions by use of $9.64 \times 10^3$—$10.34 \times 10^3$ kPa (1400—1500 psi) to form a compact of a size about 15.24 cms×1.52 cms (6″×0.6″) and a density of about 1.4 grams/$cm^3$. The pressure of compaction should be sufficient to provide a green density of at least 1.4 g/$cm^3$ (42%) in the compact.

### 4. Heating to nitride

The compact is then heated in a nitriding atmosphere, without the use of pressure normally associated with hot pressing, to produce a silicon nitride comprising body consisting of silicon nitride, at least one dispersed second phase crystallite (silicon oxynitride), 0.2—1% silicate (by weight of the body), and up to 0.5% by weight of free silicon and unreacted oxygen carrying agents (here $Y_2O_3$ and $Al_2O_3$). The body will have a size greater than and a density less than the object to be formed.

### 5. Hot pressing

The nitrided body is then hot pressed to produce a silicon nitride comprising object of required dimension and density. A pressing fixture having graphite walls is typically used to carry out the hot pressing. The walls and nitrided body are both coated with a slurry of boron nitride and dried.

The resulting product will have a strength (modulus of rupture) in a 4-point bend test of $7.58 \times 10^4$—$8.27 \times 10^4$ kPa (11000—12000 psi), as compared to $5.52 \times 10^4$—$6.89 \times 10^4$ kPa (8000—10000 psi) for material prepared according to the prior art. The coalesced particles in the product will have a Weilbull Slope for variation of strength data which is 10—18 as opposed to 7—12 for the prior art. This shows greater uniformity. The hardness HR will be increased to 92 (45—N scale) as opposed to 90 for the prior art.

**Claims**

1. A method of making a compacted body useful in the fabrication of an improved, fully densified, silicon nitride ceramic body, comprising mixing a supply of silicon powder and a supply of oxygen carrying agents with a dry milling lubricant, milling said mixture and forming a compact of said milled mixture, characterised in that said dry milling lubricant has a low surface energy value less than $1.5 \times 10^{-4}$ N/cm (15 dyne/cm) and a glass transition temperature of $-54°C$ to $-82°C$ and said dry milling lubricant is added in small amounts effective to avoid packing of said powder mixture along the sides of a milling chamber during the milling operation and thereby permitting said milling to reduce all particles to a size no greater than 40 micrometers and providing the compact having a green density of at least 42% of full theoretical.

2. A method as claimed in Claim 1, in which said dry milling lubricant is selected from the group consisting of polybutylacrylate, poly 2—ethylhexylacrylate, and polyisobutylacrylate.

3. A method as claimed in Claim 1 or 2, in which said effective small amount of drymilling lubricant is in the range of 0.001—0.006% by weight of the mixture.

4. A method as claimed in any one of Claims 1 to 3, in which the supply of silicon powder has a purity of 97% or greater and a starting average particle size as great as 26—60 micrometers.

5. A method as claimed in any one of the preceding claims, in which said supply of oxygen carrying agents is selected from the group consisting of $Y_2O_3$, $Al_2O_3$, and $SiO_2$, the purity of said oxygen carrying agents is characterised by at least 99.99% for said $Y_2O_3$ and at least 99.5% for said $Al_2O_3$.

## Patentansprüche

1. Verfahren zur Herstellung eines verfestigten, zur Fertigung eines verbesserten, vollverdichteten Siliciumnitrid-Keramikkörpers verwendbaren Körpers, bei dem man ein Siliciumpulvereinsatzmaterial und ein Sauerstoffträgereinsatzmaterial mit einem Trockenmahlungsgleitmittel vermischt, dieses Gemisch vermahlt und aus dem vermahlenen Gemisch einen Pressling bildet, dadurch gekennzeichnet, dass dieses Trockenmahlungsgleitmittel einen niedrigen Oberflächenenergiewert unter $1,5 \cdot 10^{-4}$ N/cm (15 dyn/cm) und einen Glasübergangspunkt von $-54°C$ bis $-82°C$ aufweist, und dass dieses Trockenmahlungsgleitmittel in kleinen Mengen zugesetzt wird, so dass es Anbacken dieses Pulvergemischs an den Seiten der Mahlkammer während der Mahlung wirksam verhindert, so dass sämtliche Teilchen auf eine Grösse von höchstens 40 Mikrometer vermahlen werden können und der Pressling eine Gründichte von mindestens 42% der vollen theoretischen Dichte aufweist.

2. Verfahren nach Anspruch 1, worin man dieses Trockenmahlungsgleitmittel aus der Polybutylacrylat, Poly-2-äthylhexylacrylat und Polyisobutylacrylat umfassenden Gruppe auswählt.

3. Verfahren nach Anspruch 1 oder 2, worin diese wirksame kleine Menge an Trockenmahlungsgleitmittel im Bereich von 0,001—0,006 Gewichtsprozent des Gemischs liegt.

4. Verfahren nach einem der Ansprüche 1 bis 3, worin das Siliciumpulvereinsatzmaterial eine Reinheit von 97% oder höher und eine so hohe durchschnittliche Ausgangsteilchengrösse wie 26—60 Mikrometer aufweist.

5. Verfahren nach einem der vorhergehenden Ansprüche, worin man besagtes Sauerstoffträgereinsatzmaterial aus der $Y_2O_3$, $Al_2O_3$ und $SiO_2$ umfassenden Gruppe auswählt, wobei die Reinheit dieser Sauerstoffträger durch mindestens 99,99% für $Y_2O_3$ und mindestens 99,5% für $Al_2O_3$ gekennzeichnet ist.

## Revendications

1. Procédé de préparation d'un corps compacté utile pour la fabrication d'un corps amélioré en céramique de nitrure de silicium, entièrement densifié, comprenant le mélange d'une charge de poudre de silicium et d'une charge d'agents porteurs d'oxygène avec un lubrifiant de broyage à sec, le broyage dudit mélange et la formation d'un produit compacté avec ledit mélange broyé, caractérisé en ce que ledit lubrifiant de broyage à sec a une faible valeur d'énergie de surface, inférieure à $1,5 \times 10^{-4}$ N/cm (15 dynes/cm/ et une température de transition vitreuse de $-54°C$ à $-82°C$ et en ce qu'on ajoute ledit lubrifiant de broyage à sec en petites quantités efficaces pour éviter l'agglomération dudit mélange pulvérulent le long des parois de la chambre de broyage pendant l'opération de broyage et en permettant ainsi audit broyage de réduire toutes les particules jusqu'à une taille qui n'est pas supérieure à 40 micromètres et en procurant au produit compacté une densité à vert d'au moins 42% de la valeur théorique.

2. Procédé suivant la revendication 1, dans lequel ledit lubrifiant de broyage à sec, est choisi parmi le groupe comprenant le polyacrylate de butyle, le polyacrylate de 2-éthylhexyle et le polyacrylate d'isobutyle.

3. Procédé suivant la revendication 1 ou 2, dans lequel ladite petite quantité efficace de lubrifiant de broyage à sec, est comprise dans la plage allant de 0,001 à 0,006% en poids par rapport au mélange.

4. Procédé suivant l'une quelconque des revendications 1 à 3, dans lequel la charge de poudre de silicium a une pureté de 97% ou plus et une taille particulaire moyenne de départ aussi élevée que 26 à 60 micromètres.

5. Procédé suivant l'une quelconque des revendications précédentes, dans lequel ladite charge d'agents porteurs d'oxygène est choisie parmi le groupe comprenant $Y_2O_3$, $Al_2O_3$ et $SiO_2$, la pureté desdits agents porteurs d'oxygène étant caractérisée par la valeur d'au moins 99,99% pour ledit $Y_2O_3$ et d'au moins 99,5% pour ledit $Al_2O_3$.